# EUROPEAN PATENT APPLICATION

(11) **EP 0 551 761 A1**
(43) Date of publication of application: **21.07.1993**
(21) Application number: 92311761.8
(22) Date of filing: 23.12.1992
(51) Int. Cl.: C02F 1/68

(54) **Effluent treatment apparatus**

(30) Priority: 16.01.1992 GB 9200894
(71) Applicant: IMPERIAL CHEMICAL INDUSTRIES PLC, London SW1P 3JF (GB)
(72) Inventor: Heyworth, Stephen Martin, Chester, Cheshire CH4 7PL (GB)
(74) Representative: Collingwood, Anthony Robert

(57) **Abstract**

Apparatus for the treatment of effluent discharged by a pumping station comprises a housing (10) accommodating a vessel (24) for storage of a chemical treatment agent and pumping means (26) for delivering the treatment agent in order to dose the effluent therewith. The housing (10) is designed with an integral bund so that any leakage/overflow from the vessel (24) is wholly contained within the housing. A sensor is provided for generating an alarm signal in the event of any such leakage/overflow. An ancillary housing (50, Fig 2) may be associated with the main housing (10) to provide additional storage for the treatment agent. The ancillary housing (50) is also designed with an integral bund.

## Description

This invention relates to effluent treatment apparatus, for use for example in treating sewage in the course of discharge of the sewage to the sea.

According to one aspect of the invention there is provided apparatus for the treatment of effluent comprising a housing, at least one vessel accommodated within the confines of the housing for the storage of effluent treatment chemical in fluid form, the housing having a number of access and egress locations, and means for pumping fluid from said vessel(s) to at least one egress location of the housing, the lower part of the housing being free of any access and/or egress locations so as to form a containment volume sufficient to contain all fluid in the event of leakage from the vessel(s) when full to maximum capacity.

Typically said lower part of the housing encompasses a volume at least as great as the storage volume of the vessel(s).

Preferably the housing is adapted to be transported by means of a vehicle and to this end may incorporate means for co-operation with a raising and lowering mechanism of the vehicle.

The access and/or egress locations may be of different types according to the purpose served thereby. Certain of the locations will provide points of communication between the interior and exterior of the housing for the supply of service facilities to and from the housing. For example, there may be an access location by means of which the chemical fluid may be supplied to the vessel(s). This type of access location is only likely to be in use periodically, ie when filling of the vessel(s) is required and may comprise an opening at which pipework linking the vessel(s) to the opening terminates, the opening being provided with a closure member which will normally be closed but can be opened when filling of the vessel(s) from, for instance, a mobile fluid supply tanker.

Other forms of access/egress locations may be required to afford a more permanent form of connection with an external service facility. For example, the pumping means and feasibly other equipment within the housing will typically require a supply of electrical power from an external source and may also require some form of external control input and/or communication with a remote monitoring station. In this event, where there is more permanent connection with the outside world, the or each access/egress location is conveniently in the form of an opening in a wall of the housing, which openings is provided with an external shroud extending towards the base of the housing so as to enclose the opening and the service conduit or cable which, in use, will be connected to the interior of the housing through such opening. The egress location to which said pumping means is connected is conveniently of the shrouded form with a conduit connected with the pumping means through the associated opening to provide a service conduit leading from the housing for effecting dosing of effluent with said treatment fluid.

In addition to access/egress locations providing service type connections between the housing and the outside world, there may also be at least one access location providing an entry point for maintenance and operating personnel. Such entry location is conveniently provided in a side wall of the housing and has with a door which may be provided with locking means to prevent unauthorised entry into the housing.

As the treatment chemical used may produce unpleasant vapours, such as chlorine, the housing is preferably equipped with a ventilation system to enable any such vapours to be exhausted to the exterior. Operation of the ventilation system may be continuous or it may be co-ordinated with the door so that it is automatically operated either on opening of the door or release of the locking means associated with the door.

The pumping means is arranged to provide a variable flow rate so that the treatment chemical is supplied from the vessel(s) at a rate appropriate to the volume or mass flow rate and/or concentration of effluent to be treated. Thus, for example, the pumping means may be provided with control means responsive to the effluent flow rate; for example, the control means may include sensor means for sensing the effluent flow rate and programmable logic circuitry for determining the rate of pumping of said treatment fluid from the vessel(s).

The invention will now be described by way of example only with reference to the accompanying drawing, in which:
Figure 1 is a diagrammatic perspective view of a modular chemical dosing apparatus in accordance with the invention for use in the treatment of sewage; and
Figure 2 is a similar view to that of Figure 1 but showing the unit of Figure 1 in use in conjunction with an ancillary unit.

As shown the modular dosing apparatus comprises a housing 10 in the form of a transportable cabin having a base 12, side walls 14 and a roof 16. The housing is provided with a number of columns 18 on opposite side walls thereof which, at their upper ends, terminate in hoisting plates 20 to permit the housing to be loaded onto a vehicle for transport. The lower ends of the columns 18 are provided with brackets 22 by means of which the housing can be bolted to the ground, eg a concrete base, for security in flood conditions in for example coastal areas.

A vessel 24 for the storage of an effluent treatment fluid, for instance a sewage disinfectant such as hypocholorous acid, is accommodated within the housing 10 and has a pumping unit comprising one or more electrically powered pumps 26 (which may be magnetic drive pumps or positive displacement pumps for instance) associated therewith for withdrawing the treatment fluid from the vessel 24 via electrically operable valves and discharging it via an outlet pipe 28. The pumping unit includes an electrical connection box 30 through which the pumps and/or flow control valves associated therewith are communicated via cabling 32 with a remotely sited control circuitry incorporating a programmable logic controller (PLC) which is arranged to monitor the external sewage pumps associated with the sewage disposal plant to determine the sewage discharge flow rate and control the pumps 26, and/or control valves associated therewith, to provide a fluid treatment dosing rate suitable for the sewage flow rate detected. The pumps are conveniently operated alternately by the controller in a duty-standby mode, ie. during pumping only one pump is operated at a time, the other pump being in a standby mode. At intervals, the controller will switch the pumps between duty and standby modes so as to equalise operation of each pump.

The remotely sited controller may for example be located within the sewage pumping station. Alternatively the controller may be housed within the housing 10 and may receive signals (eg. by means of a telemetry system) from a sewage pumping system and, on the basis of those signals, the controller may operate to control the dosing rate. The signals received from the sewage system may for instance be in the form of validated sewage pump running signals or they may be signals corresponding to a measure of the sewage flow. Electrical power from an external source is supplied to the pumps 26 via connection box 30 by cabling 32.

Under normal sewage pumping conditions, the PLC is arranged to control dosing in proportion to the calculated flow rate; however, under storm flow conditions, the PLC is arranged to control dosing initially in proportion to the calculated flow rate so as to allow time for the initial slug of undiluted sewage to pass through the system and be treated correctly. Thereafter, the PLC reduces the dosing rate to allow for the reduced concentrations of sewage as the storm flow passes through the system. Storm conditions are detected by monitoring the sewage flow profile.

Filling of the vessel 24 is effected by means of a fill line 34 which terminates in a valve controlled inlet 36 which is accessible through an opening in one of the housing sidewalls normally closed by hinged hatch door 38, which is lockable. A level indicator 39 serves to indicate the fluid level within the vessel 24. This information may be also signalled electrically to the remotely sited controller so that the state of the vessel can be monitored from the pumping station or other remote location. Access to the interior of the housing is afforded by an inward opening door 40 provided with a multi-point security locking system to prevent unauthorised access. Access via the roof can also be provided by means of removable roof panels. Fans 42 are installed to vent the interior of the housing to the surroundings as required, eg prior to or during man access to the housing interior. The remotely sited controller may be arranged to monitor the doors 38 and 40 and emit alarm signals in the event of their being open, eg in response to opening of these doors, the controller may initiate a timing sequence leading to triggering of an alarm signal unless the operative enters an authorisation code within a predetermined time interval.

It will be noted that the housing has a number of access locations such as the door 40, hatch door 38, and openings through which the outlet pipe 28 and cabling 32 pass through the housing walls. All of these access locations are located at a height above a predetermined level to produce an uninterrupted perimeter wall (integral bund), the height of which is sufficient to contain within the housing any liquid that may leak or otherwise discharge from the vessel 24 irrespective of the extent to which the vessel is filled. In practice, the height of the bund will be such as to encompass a volume at least as great as the maximum capacity of the vessel 24. Components such as the pumps 26 and a control console embodying the PLC (when housed within the housing 10) will be mounted within the housing at a level above the bund so as to avoid the risk of damage to these components in the event of a leakage.

The vessel 24 is provided with an overflow pipe 41 which extends from the top of the vessel to a location below the top of the integral bund which serves to contain any overflow is contained within the housing. Sensor means, connected to the remotely located controller, may be arranged to detect any such leakage or overflow so that a suitable alarm signal may be generated by the controller in this event. The outlet pipe 28 and the cabling 32 will be routed underground externally of the housing and the associated access locations are enclosed within shrouds 44 extending to ground level. The shrouds 44 are bolted in position from the interior of the housing to prevent tampering. In general, all fittings accessible externally of the housing are attached in such a way as to render them vandal proof.

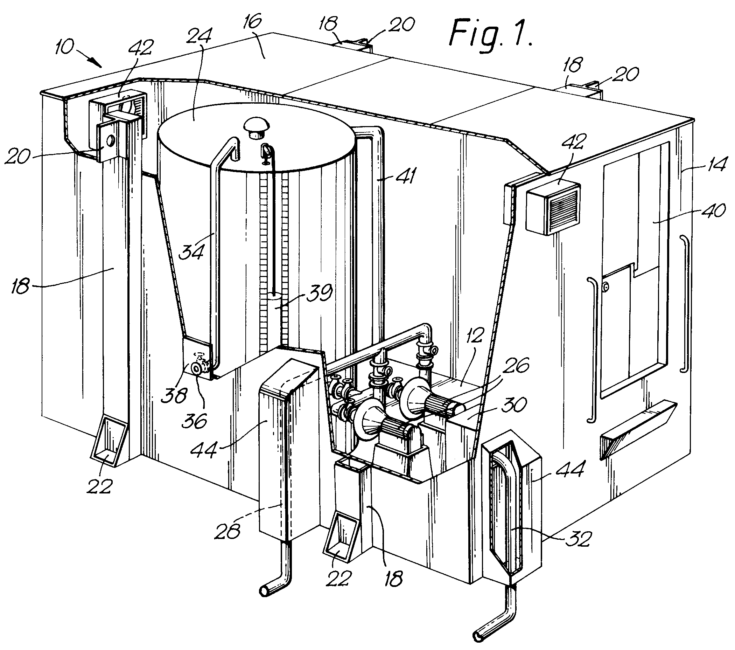

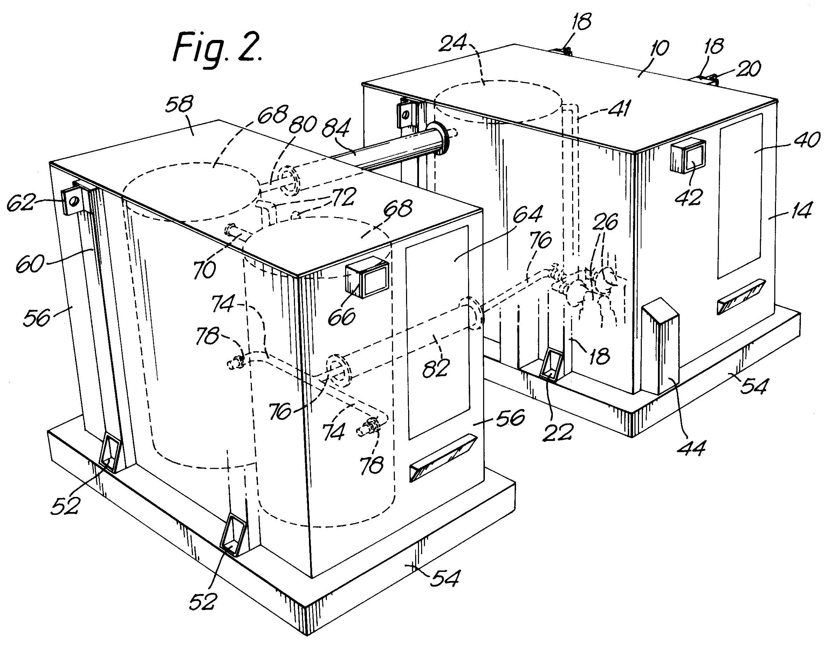

Figure 2 illustrates a modification of the unit shown in Figure 1 in which an ancillary housing 50 is used in conjunction with the housing 10. In Figure 2, the housing 10 may be identical to that shown in Figure 1 and the same reference numerals are used in both Figures to depict the same components. The ancillary housing 50 is constructed in the same way as the housing 10 with a base seating on, and bolted via brackets 52 to, a concrete plinth 54, side walls 56 and a roof 58. The brackets 52 are connected to columns 60 which terminate at their upper ends in hoisting brackets 62 to facilitate loading and unloading of the housing onto and from a transport vehicle when the housings are to be transported from the site of manufacture to the location of installation or from one such location to another. As described in relation to the main housing 10, the ancillary housing 50 has an access door 64 for personnel and a ventilation fan or fans 66 and all access/egress openings in the ancillary housing 50 are located above a predetermined level to provide a bund as in the case of the housing 10.

Accomodated within the ancillary housing 50, there are two stock vessels 68 for containing the same chemical treatment agent as contained in vessel 24 of the main housing, the two vessels being interconnected by pipe 70 and each having an overflow pipe 72 which is arranged to discharge any overflow into the lower part of the housing 50 forming the bund. Both vessels 68 are connected to the pumps 26 via pipework 74, 76 and valves 78 so that the chemical agent to be dosed into the effluent or sewage is available from all three vessels 24 and 68. The valves 78 are electrically operable and are controlled by the controller associated with (or accommodated within) the main housing 10. Although not shown, both vessels 68 are provided with filling pipes similar to the filling pipe 34 of the main vessel 24 and the filling pipes of the ancillary vessels similarly terminate in valve-controlled inlets which can be accessed via hinged flaps provided on the sides of the housing 50 at a level above the bund. The ancillary vessels are interconnected with one another by the pipe 70 and are also connected to the main vessel 24 via pipe 80 and the pipes 70, 80 are located close to the top of the respective vessels but below the entry points of the overflow pipes so that, if during filling of any one of the vessels, overfilling occurs the excess liquid is routed via pipe 70 and/or 80 to one of the other vessels rather than overflowing into the interior of the housing via the overflow pipes 41 or 72.

The pipes 76 and 80 extending between the main and ancillary housings 10, 50 are enclosed within ducts 82, 84 which link the interiors of the housings and are connected to each housing via bolted, fluid tight sealing arrangements. The lower duct 82 is located at a level below the bunds of the two housings so that the region enclosed within the bund associated with ancillary housing 50 forms a continuation of the corresponding region enclosed within the bund of the housing 10. The height of each bund is such that, in the event of leakage of the entire contents of each vessel (even when full to maximum capacity), all leakage is contained within the main and ancillary vessels. The bund associated with each vessel may be such that volume encompassed by the respective housing will sufficient to contain all leakage from the associated vessels.

In an alternative arrangement, the arrangement may be such that the volume encompassed by one vessel is insufficient to contain all leakage from the associated vessel(s); however, in this event, the arrangement will be such that the collective volume encompassed by the bunds of both vessels will be sufficient to contain all liquid in the unlikely event that the contents of all vessels (when full to maximum capacity) leaks into the housings. Thus, for example, in Figure 2 the ancillary housing accommodates two vessels 68 whereas the main housing 10 accommodates only one. Because the two housings are linked by duct 82, it is feasible for the housing 50 to be designed in such a way that the volume encompassed by the bund thereof is sufficient to contain the major part, but not all, of the liquid contained by both vessels (when full to maximum capacity) since any excess liquid will be channelled into the main housing 10 via duct 82 and the bund of the latter housing may be such that it encompasses a volume sufficient to contain leakage from the vessel 24 plus excess liquid from the ancillary housing.

In operation, the controller controls the valves associated with the vessel 24 and 68 to ensure that a supply of treatment agent is available for pumping. Initially for instance, the pumping unit may draw treatment agent from the main vessel 24 until its contents run low at which time the controller detects this condition and operates one of the valves associated with the vessels 68 to allow treatment agent to be drawn from one of the ancillary vessels, and so on. A suitable signal may be generated by the controller when for example the collective contents of the vessels approaches a predetermined amount so that the vessels can be replenished before supply of the treatment agent is exhausted.

Although only one ancillary housing is shown, it will be appreciated that there may be more than one connected to the main housing in the same manner as described with reference to Figure 2.

## Claims

1. Apparatus for the treatment of effluent comprising a housing, at least one vessel accommodated within the confines of the housing for the storage of effluent treatment chemical in fluid form, the housing having a number of access and egress locations, and means for pumping fluid from said vessel(s) to at least one egress location of the housing, the lower part of the housing being free of any access and/or egress locations so as to form a containment volume sufficient to contain all fluid in the event of leakage from the vessel(s) when full to maximum capacity.

2. Apparatus as claimed in Claim 1 in which the housing accommodates electrical control means for determining the rate of pumping fluid from the housing.

3. Apparatus as claimed in Claim 2 in which the control means is linked to an external signal source associated with an effluent pumping station providing signals representative of the rate of discharge of the effluent and in which the control means is operable to control the rate at which said pumping means delivers said treatment chemical in dependence upon said signals.

4. Apparatus for the treatment of effluent comprising a main housing, at least one ancillary housing, at least one vessel accommodated within the confines of at least one of the housings for the storage of effluent treatment chemical in fluid form, means interconnecting the main and ancillary housings, each housing having a number of access and egress locations, and means housed within the main housing for pumping fluid from said vessel(s) to at least one egress location of at least one of the housings, the lower parts of the main and ancillary housings being interconnected by said interconnecting means and being free of any access and/or egress locations so as to form a containment volume sufficient to contain all fluid in the event of leakage from the vessel(s) when full to maximum capacity.

5. Apparatus as claimed in any one of Claims 1 to 4 in which piping and/or cabling passing through egress locations of the or each housing is routed generally vertically downwards externally of the housing and is enclosed within a shroud secured to the exterior of the housing.

6. Apparatus as claimed in any one of Claims 1 to 5 in which the or each housing is equipped with ventilation means for exhausting vapours from the housing.

7. Apparatus as claimed in any one of Claims 1 to 6 in which the or each housing is provided with means for cooperation with a raising and lowering mechanism to facilitate transport thereof.

8. Apparatus as claimed in any one of Claims 1 to 7 including sensor means for detecting leakage or overflow of fluid from said vessel(s) and means for generating an alarm signal in the event of such leakage/overflow being detected.
